Europäisches Patentamt

European Patent Office

Office européen des brevets

(11) Veröffentlichungsnummer: **0 363 573**
**A2**

(12) **EUROPÄISCHE PATENTANMELDUNG**

(21) Anmeldenummer: **89111852.3**

(51) Int. Cl.⁵: **B61F 5/32**

(22) Anmeldetag: **29.06.89**

(30) Priorität: **14.10.88 DE 3835033**

(43) Veröffentlichungstag der Anmeldung:
**18.04.90 Patentblatt 90/16**

(84) Benannte Vertragsstaaten:
**ES FR IT NL SE**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Leo, Rolf**
**Altdorferstrasse 8**
**D-8857 Wertingen(DE)**
Erfinder: **Nowak, Franz**
**Menlanstrasse 28**
**D-8028 Taufkirchen(DE)**

(54) **Radsatzlenker.**

(57) Um einen Radsatzlenker (12) für das Drehgestell eines Schienenfahrzeugs, der endseitig einerseits am Drehgestellrahmen und andererseits am Radsatzlagergehäuse jeweils über Verschraubungen und metallische Verzahnungen (14) fest eingespannt ist, auf herstellungsmäßig einfache Weise mit hoher Dauerfestigkeit in Vertikalrichtung elastisch, in Quer- und Längsrichtung hochsteif und zugleich auch elektrisch nicht-leitend auszubilden, ist der Lenker erfindungsgemäß in Hybridbauweise aus jeweils im Lenker-Endbereich (30) angeordneten, mit den Verzahnungen versehenen Metallplatten (32) sowie einem von diesen getrennt vorgefertigten, blattfederartig ausgebildeten Faserverbundbauteil (28) mit zwischen den Metallplatten vorwiegend unidirektionalem, im Platten-Auflagebereich jedoch im wesentlichen quasiisotropem Faserlagenaufbau zusammengefügt und die Metallplatten sind mit dem Faserverbundbauteil jeweils durch mehrere, paßgenau in entsprechende Aufnahmebohrungen (40) des Faserverbund-Bauteils eingreifende Verbindungselemente (34, 38) verkoppelt.

FIG. 3

## Radsatzlenker

Die Erfindung bezieht sich auf einen Radsatzlenker für das Drehgestell eines Schienenfahrzeugs, nach dem Oberbegriff des Patentanspruchs 1.

Bekannte Radsatzlenker dieser Art, die die Längs- und Querführung der Radsätze übernehmen und zugleich Vertikalbewegungen zwischen Drehgestellrahmen und Radsätzen in der Primärfederstufe gelenkfrei zulassen müssen, haben im Betrieb hohe, wechselnde Längs- und Querkräfte und vor allem Quermomente über lange Einsatzzeiten wartungsfrei auszuhalten und sind nach Art von in horizontaler Anordnung einerseits am Drehgestellrahmen und andererseits am Radsatzlagergehäuse eingespannten Blattfedern einschließlich der zur sicheren Kraftübertragung erforderlichen Verzahnungen einstückig aus hochfestem Stahl hergestellt. Mit derartigen Radsatzlenkern stellt sich das Problem, daß die Radsatzrollenlager in den elektrischen Strompfad zwischen Wagenkasten und Schiene einbezogen werden und daher, bedingt durch elektrische Funkenbildung an den Lagerrollen, einem erhöhten Verschleiß ausgesetzt sind und häufig ausgewechselt werden müssen.

Aufgabe der Erfindung ist es, einen Radsatzlenker der eingangs genannten Art zu schaffen, der unter Beibehalt des günstigen Festigkeits- und Steifigkeitsverhaltens eines üblichen, endseitig verzahnten Stahllenkers auf herstellungsmäßig einfache Weise elektrisch nichtleitend ausgebildet ist.

Diese Aufgabe wird erfindungsgemäß durch den im Anspruch 1 gekennzeichneten Radsatzlenker gelöst.

Der erfindungsgemäße Radsatzlenker ist aufgrund seiner speziellen Hybrid-Bauweise mit der blattfederartig zwischen den Befestigungsstellen wirkenden Faserverbundstruktur und den endseitig an diese angefügten Metallplatten elektrisch nichtleitend sowie gut körperschalldämpfend, vor allem aber auch in hohem Maße last- und faserverbundgerecht ausgebildet. So sind die zur sicheren Quermomenten-Übertragung geforderten Verzahnungen des Lenkers nicht an der Faserverbundstruktur, sondern an den in dieser Hinsicht wesentlich abschersichereren Metallplatten ausgebildet, und zur Verbindung der Metallplatten mit der Faserverbundstruktur wird mit Rücksicht auf das unter Last unterschiedliche Dehnungsverhalten beider Werkstoffe bewußt auf eine Verkoppelung ihrer gegenseitigen Auflageflächen, etwa über eine Klebstoff-oder eine sonstige, großflächige Form- oder Kraftschlußverbindung, verzichtet und statt dessen sind im Faserverbundbauteil singuläre Lasteinleitungsstellen in Form von Durchgangsbohrungen mit einer durch den aufgedickten Faserlagenaufbau annähernd isotrop erhöhten Lochlaibungsfestigkeit vorgesehen, in die an den Metallplatten befestigte Passverbindungselemente eingepreßt sind. Die Erfindung entspricht somit in vollem Umfang der Forderung nach einem elektrisch nichtleitenden, endseitig mit lastübertragenden Außenverzahnungen versehenen Radsatzlenker mit definiertem Elastizitätsverhalten, der auf konstruktiv einfache Weise eine hohe Dauerstandfestigkeit gewährleistet, also auch unter den rauhen Einsatzbedingungen und starken Wechselbeanspruchungen am Drehgestell eines Schienenfahrzeugs weitgehend wartungs- und verschleißfrei arbeitet.

Eine unter dem Aspekt der kräftemäßigen Entkoppelung der gegenseitigen Auflageflächen der Metall- und Faserverbund-Bauteile besonders bevorzugte Ausgestaltung der Erfindung besteht gemäß Anspruch 2 darin, daß diese Auflageflächen jeweils eben ausgebildet sind und zwischen ihnen eine reibungsmindernde Gleitschicht, z. B. aus Polytetrafluoräthylen, angeordnet ist.

Zur Erhöhung der Schubsteifigkeit des blattfederartig wirkenden Mittelabschnitts des Faserverbundbauteils sind zweckmäßigerweise gemäß Anspruch 3 zusätzlich zu den unidirektionalen auch $\pm$ 45° - Faserlagen, allerdings mit einem wesentlich geringeren Faserlagen-Gewichtsanteil, vorgesehen, die sich ebenfalls über die gesamte Bauteillänge erstrecken, wobei zur Erzielung des annähernd isotropen Festigkeitsverhaltens an den Bauteilenden zwischen die unidirektionalen und $\pm$ 45° - Faserlagen noch solche mit senkrecht zur Bauteil-Längsrichtung verlaufender Faserorientierung eingelegt sind.

Gemäß Anspruch 4 sind in baulich besonders zweckmäßiger Ausgestaltung als Verbindungselemente metallische Aufnahmehülsen für die Verschraubungen vorgesehen, so daß das Faserverbundbauteil und die Metallplatten lediglich mit den Aufnahmebohrungen für die Verbindungselemente versehen, nicht aber zusätzlich auch für die Verschraubungen verbohrt werden müssen. Für den Fall, daß die Anzahl der von den Verschraubungen durchsetzten Aufnahmehülsen jedoch nicht für eine ausreichend lastsichere Verkoppelung von Metallplatte und Faserverbund-Bauteil ausreicht, sind gemäß Anspruch 5 zweckmäßigerweise als zusätzliche Verbindungselemente jeweils mit einem erweiterten Bund in eine Blindbohrung der Metallplatte eingepreßte Metallzapfen bzw. -hülsen vorgesehen, wobei durch den erweiterten Bund die kippsichere Fixierung der Verbindungselemente an den Metallplatten verbessert wird und überhöhte Lochlaibungsspannungen im Bereich der Blindbohrungen vermieden werden.

Die sichere, endseitige Einspannung des Faserverbund-Bauteils wird in baulich einfacher, besonders bevorzugter Weise gemäß Anspruch 6 durch die auf der verschraubungsseitigen, der Metallplatte abgewandten Außenfläche des Faserverbundbauteils angesetzte, metallische Gegenplatte weiter verbessert. Gemäß Anspruch 7 schließlich empfiehlt es sich, im Hinblick auf die im Bereich der Aufnahmebohrungen der Faserverbundstruktur auftretenden, relativ hohen wechselnden Lochlaibungskräfte und die geforderte, große Biegeelastizität in Vertikalrichtung ungeachtet von Kostengründen als Werkstoff für das Faserverbundbauteil vorwiegend glasfaserverstärkten Kunststoff zu verwenden.

Die Erfindung wird nunmehr anhand des in den Fig. gezeigten Ausführungsbeispiels näher erläutert. Es zeigen in schematischer Darstellung:

Fig. 1 einen Teilausschnitt eines Drehgestells mit zwei Radsatzlenkern nach der Erfindung;

Fig. 2 die Aufsicht eines Radsatzlenkers gemäß Fig. 1;

Fig. 3 einen Schnitt längs der Linie III-III der Fig. 2;

Fig. 4 einen vergrößerten Teilschnitt längs der Linie IV-IV der Fig. 2 im eingebauten Zustand des Lenkers; und

Fig. 5 das Legeschema des Faserverbundbauteils im Bereich der aufgedickten Endabschnitte.

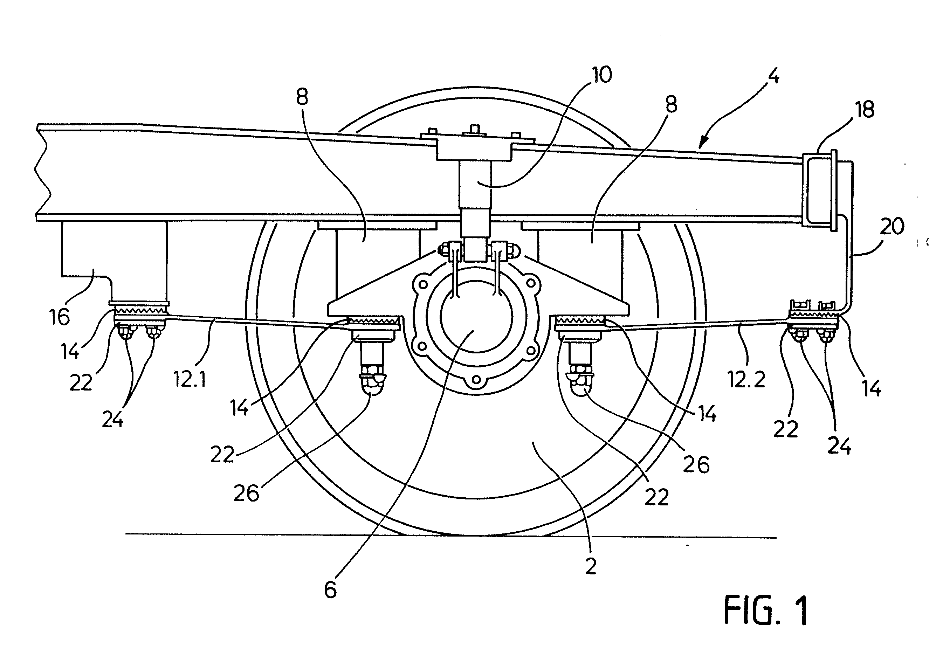

In Fig. 1 ist ausschnittweise das Drehgestell eines Schienenfahrzeuges im Bereich des Drehgestell-Kopfabschnittes mit einem zugeordneten Radsatz 2 dargestellt, welcher am Drehgestellrahmen 4 über eine zwischen dem Rollenlagergehäuse 6 des Radsatzes 2 und dem Drehgestellrahmen 4 wirkende Primärfederstufe in Form eines Druckfederpaares 8 und eines zu diesem parallel angeordneten Schwingungsdämpfers 10 abgestützt und durch zwei, horizontal zwischen Drehgestellrahmen 4 und Lagergehäuse 6 verlaufende Radsatzlenker 12.1 und 12.2 in Quer- und Längsrichtung des Drehgestells stabil, in Richtung der vertikalen Federbewegungen der Primärfederstufe 8, 10 jedoch beweglich geführt ist. Aus Gründen einer exakten Radsatzführung unter der Einwirkung der hohen Wechselbelastungen, die sich aus den zu übertragenden Quer- und Längskräften und den daraus unter Berücksichtigung der Länge der Lenker 12 resultierenden Quermomenten ergeben , sind die Radsatzlenker 12 jeweils nach Art einer hochgradig quer- und längssteifen, vertikalelastischen, beidseitig fest eingespannten Blattfeder ausgebildet und im Einspannbereich mit Verzahnungen 14 versehen, die mit entsprechenden, gehäuse- bzw. rahmenseitigen Gegenverzahnungen formschlüssig zusammenwirken, wobei die rahmenseitigen Gegenverzahnungen für den inneren Radsatzlenker 12.1 an einem steifen Lagerbock 16 und für den äußeren Radsatzlenker 12.2 an einem zum Ausgleich von Längenänderungen bei den Vertikalbewegungen des Radsatzes 2 geringfügig nachgiebigen, am Rahmenkopfstück 18 befestigten Winkelstück 20 ausgebildet sind. Die Befestigung der Lenker 12 an den Einspannstellen erfolgt durch aus Sicherungsgründen als Dehnschrauben ausgebildete Verschraubungen unter Zwischenlage jeweils einer den Einspannbereich des Lenkers 12 auf der den Verzahnungen 14 gegenüberliegenden Außenseite flächig abdeckenden, metallischen Gegenplatte 22, und zwar sind an den rahmenseitigen Einspannstellen jeweils vier, an den lagergehäuseseitigen jedoch aus Montagegründen nur jeweils eine einzige Dehnschraube 24 bzw. 26 vorgesehen.

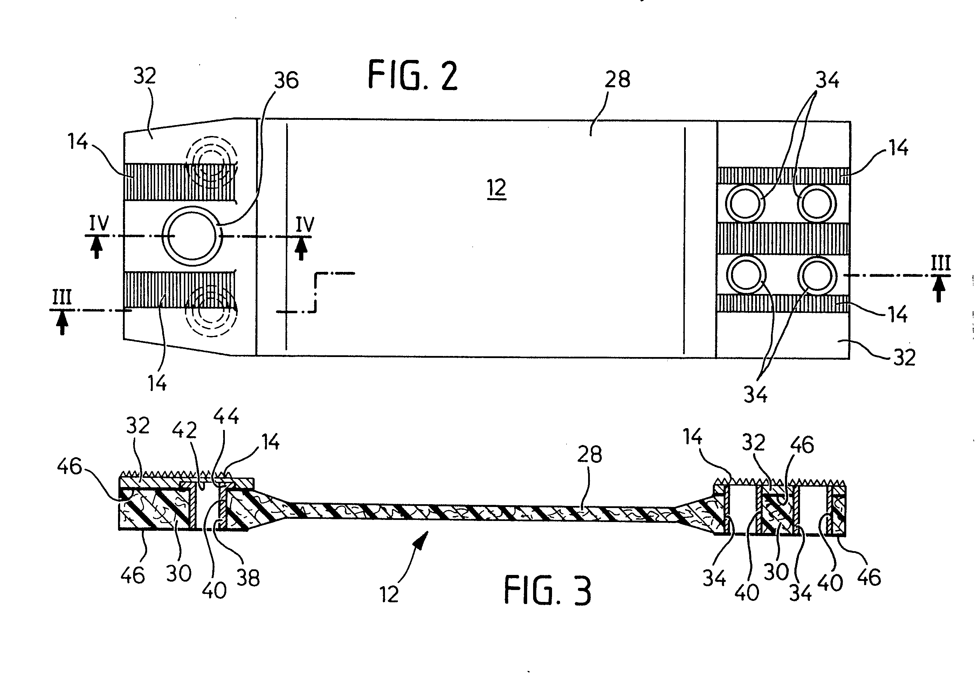

Zum Schutz der Rollenlager vor Stromschäden wird - ebenso wie für die Primärfederstufe 8, 10 - auch für die Radsatzlenker 12 eine elektrisch nichtleitende Ausbildung gefordert. Dies wird dadurch erreicht, daß jeder Lenker 12 gemäß den Fig. 2 bis 5 in Hybridbauweise aus einem als quer- und längssteife Blattfeder ausgebildeten Faserverbundbauteil 28 und an dieses jeweils in den aufgedickten Bauteil-Endbereichen 30 angesetzten Metallplatten 32 zusammengefügt ist, an denen die Verzahnungen 14 ausgebildet sind.

Die Verkoppelung der Metallplatten 32 mit dem Faserverbundbauteil 28 erfolgt ausschließlich über unter Last scherbeanspruchte, metallische Passhülsen 34, 36 und 38, die in die Metallplatten 32 einseitig über die unverzahnte Plattenfläche vorstehend eingepreßt und am Faserverbundbauteil 28 sich durch entsprechende Durchgangsbohrungen 40 in den aufgedickten Bauteil-Endabschnitten 30 erstreckend ebenfalls im Preßsitz befestigt sind. Die die Metallplatten 32 im Bereich zwischen den Verzahnungen 14 durchsetzenden Metallhülsen 34 und 36 dienen zur Aufnahme der Verschraubungen 24 bzw. 26, während die Metallhülsen 38, die zusätzlich zu der Einzelhülse 36 am lagergehäuseseitigen Ende des Lenkers 12 zur lastsicheren Verkoppelung des Faserverbundbauteils 28 und der Metallplatte 32 erforderlich sind, im Verzahnungsbereich 14 und daher in einer Blindbohrung 42 der Metallplatte angeordnet und mit einem erweiterten Bund 44 versehen sind, wodurch die Lochlaibungsspannung an den Blindbohrungen 42 der ohnehin schon relaitv dünnwandigen Metallplatte 32 reduziert wird. Um eine durch das unterschiedliche Dehnungsverhalten der Metallplatten 22, 32 einerseits und des Faserverbundbauteils 28 andererseits unter Wechselbelastungen bedingten Abrieb ihrer gegenseitigen Auflageflächen zu verhindern, sind diese Auflageflächen eben ausgebildet und das Faserverbundbauteil 28 ist in den Auflagebereichen der Metallplatten 22 und 32 jeweils mit einer reibungsmindernden, verschleißfesten Gleitschicht 46 aus Polytetrafluoräthylen versehen.

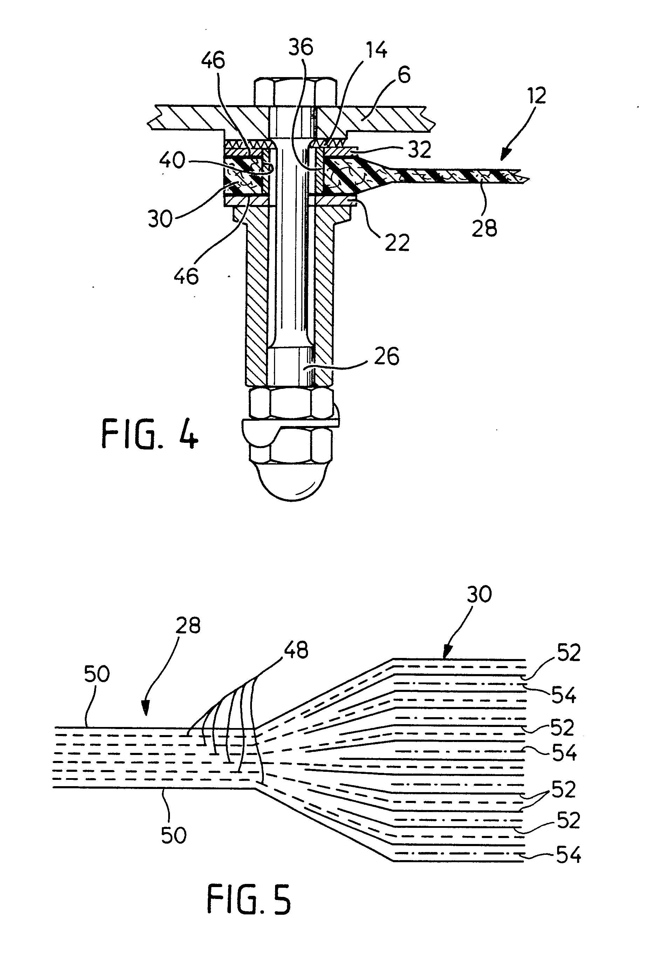

Der Faserlagenaufbau des Faserverbundbauteils 28 ist im einzelnen aus Fig. 5 ersichtlich. In dem die Blattfeder bildenden Mittelabschnitt besteht das Faserverbundbauteil 28 vorwiegend aus in Bauteil-Längsrichtung unidirektionalen (gestrichelt gezeichneten) Gewebelagen 48, denen - mit einem geringeren prozentualen Fasergewichtsanteil von z. B. 20 % - Faserlagen 50 mit einer ± 45˙-Faserorientierung zur Schubsteifigkeitserhöhung zugefügt sind. Die Faserlagen 48, 50 erstrecken sich über die gesamte Bauteillänge. Da wegen der kräftemäßigen Entkoppelung der gegenseitigen Auflageflächen nahezu sämtliche Quer- und Längsbelastungen an singulären Lasteinleitungsstellen, nämlich ausschließlich über die Metallhülsen 34, 36, 38 und die Aufnahmebohrungen 40 übertragen werden, ist das Faserverbundbauteil 28 im Hinblick auf die sich an den Aufnahmebohrungen 40 ergebenden, wechselnden Lochlaibungsspannungen im Bereich der Endabschnitte 30 aufgedickt und besitzt einen im wesentlichen quasiisotropen Faserlagenaufbau. Zu diesem Zweck sind zwischen die durchlaufenden Faserlagen 48, 50 in den Endbereichen 30 weitere ± 45˙ - Faserlagen 52 und zusätzliche Gewebelagen 54 mit einer zur Bauteil-Längsrichtung senkrecht verlaufenden Faserorientierung eingelegt, derart, daß sich an den Endabschnitten 30 für jede der vier Faserrichtungen ein nahezu gleich-großer Fasergewichtsanteil ergibt. Als Faserlagen 48 -54 werden Glasfasergewebe verwendet, die mit Harz getränkt werden. Nach dem Aushärten wird das Faserverbundbauteil 28 verbohrt, woraufhin die mit der Gleitschicht 46 versehenen Metallplatten 32 durch Einpressen der Metallhülsen 34, 36 und 38 angefügt werden und der Radsatzlenker fertiggestellt ist.

**Ansprüche**

1. Radsatzlenker für das Drehgestell eines Schienenfahrzeugs, der zur Führung der Radsatzachsen mit hoher Längs- und Quersteifigkeit, in Richtung der Vertikalbewegungen des Radsatzes jedoch biegeelastisch nach Art einer Blattfeder ausgebildet und über im Lenker-Endbereich angeordnete, metallische Verzahnungen und Verschraubungen einerseits am Radsatzlagergehäuse und andererseits am Drehgestellrahmen form- und kraftschlüssig befestigt ist,
dadurch **gekennzeichnet**, daß
der Radsatzlenker aus jeweils an den Lenker-Endabschnitten angeordneten, mit den Verzahnungen (14) versehenen Metallplatten (32) sowie einem getrennt von den Metallplatten vorgefertigten und diese blattfederartig miteinander verbindenden Faserverbundbauteil (28) mit in Längsrichtung zwischen den Metallplatten vorwiegend unidirektionalem, im Auflagebereich der Metallplatten jedoch im wesentlichen quasi-isotropem, aufgedicktem Faserlagenaufbau zusammengefügt ist und die Metallplatten mit dem Faserverbundbauteil jeweils durch mehrere einseitig über die unverzahnte Platten-Auflagefläche vorstehende und passgenau in entsprechende Aufnahmebohrungen (40) des Faserverbundbauteils eingreifende Verbindungselemente (34, 36, 38) verkoppelt sind.

2. Radsatzlenker nach Anspruch 1,
dadurch **gekennzeichnet**, daß
die unverzahnte Platten-Auflagefläche und die korrespondierende Gegenfläche des Faserverbundbauteils jeweils eben ausgebildet und zwischen diesen eine rei bungsmindernde, verschleißfeste Gleitschicht (46) angeordnet ist.

3. Radsatzlenker nach Anspruch 1 oder 2,
dadurch **gekennzeichnet**, daß
das Faserverbundbauteil (28) zusätzlich zu den unidirektionalen (48) weitere, sich über die gesamte Bauteillänge erstreckende, zur Bauteil-Längsrichtung jedoch unter + 45˙ verlaufende Faserlagen (50) enthält, zwischen die an den aufgedickten Bauteil-Endabschnitten (30) Faserlagen (54) mit senkrecht zur Bauteil-Längsrichtung verlaufender Faserorientierung eingelegt sind.

4. Radsatzlenker nach einem der vorhergehenden Ansprüche,
dadurch **gekennzeichnet**, daß
als Verbindungselemente (34, 36) metallische Aufnahmehülsen für die Verschraubungen (24, 26) vorgesehen sind.

5. Radsatzlenker nach einem der vorhergehenden Ansprüche,
dadurch **gekennzeichnet**, daß
als Verbindungselemente (38) im Bereich der Verzahnungen (14) jeweils mit einem erweiterten Bund (44) in Blindbohrungen (42) der Metallplatte (32) eingepreßte Metallzapfen bzw. -hülsen vorgesehen sind.

6. Radsatzlenker nach einem der vorhergehenden Ansprüche,
dadurch **gekennzeichnet**, daß
das Faserverbundbauteil (28) im verschraubten Zustand endseitig jeweils zwischen der zugeordneten Metallplatte (32) und einer den aufgedickten Bauteil-Endabschnitt (30) auf der der Metallplatte abgewandten Bauteilseite flächig abdeckenden Gegenplatte (22) eingespannt ist.

7. Radsatzlenker nach einem der vorhergehenden Ansprüche,
dadurch **gekennzeichnet**, daß
das Faserverbundbauteil (28) aus vorwiegend glasfaserverstärktem Kunststoff besteht.

EP 0 363 573 A2

FIG. 1

EP 0 363 573 A2

## FIG. 2

## FIG. 3

FIG. 4

FIG. 5

10569